# EUROPEAN PATENT SPECIFICATION

(11) **EP 1 261 991 B1**
(45) Date of publication and mention of the grant of the patent: **20.08.2008**
(21) Application number: 01908323.7
(22) Date of filing: 05.03.2001
(51) Int. Cl.: H01M 2/04, H01M 2/12

(54) **MANGANESE DRY BATTERY**
MANGAN-TROCKENBATTERIE
PILE SECHE AU MANGANESE

(30) Priority: 10.03.2000 JP 2000066775
(43) Date of publication of application: 04.12.2002
(73) Proprietor: MATSUSHITA ELECTRIC INDUSTRIAL CO., LTD., Kadoma-shi, Osaka 571-8501 (JP)
(72) Inventor: ASHIHARA, Ryohei, Neyagawa-shi, Osaka 572-0030 (JP); OGINO, Keiji, Katano-shi, Osaka 576-0041 (JP); HASE, Hiroshi, Kencana IV-Pondok Indah, Jakarta 12310 (ID); IGUCHI, Naoto, Kanagawa 2253-0014 (JP)
(74) Representative: TBK-Patent
(86) International application number: PCT/JP2001/001700
(87) International publication number: WO 2001/067527

(56) References cited:
- EP-A- 0 785 585
- US-A- 4 020 241
- US-A- 4 227 701
- US-A- 5 932 371
- PATENT ABSTRACTS OF JAPAN vol. 009, no. 193 (E-334), 9 August 1985 (1985-08-09) & JP 60 062059 A (MATSUSHITA DENKI SANGYO KK), 10 April 1985 (1985-04-10)
- PATENT ABSTRACTS OF JAPAN vol. 009, no. 150 (E-324), 25 June 1985 (1985-06-25) & JP 60 032246 A (TOSHIBA DENCHI KK), 19 February 1985 (1985-02-19)

## Description

### Technical Field

The present invention relates to an improvement in a manganese dry battery according to the preamble of claim 1 having an outer structure that a naked battery is coated with a tube or a label comprising a heat-shrinkable resin film as a base material, particularly to a safety mechanism against an increase in battery internal. pressure.

### Background Art

In manganese dry batteries having an outer structure that a naked battery (a battery with a zinc can exposed to outside) is coated simply with a tube or a label comprising a heat-shrinkable resin film as a base material for the purpose of cost reduction, the batteries are conventionally sealed airtightly by fitting a gasket into an opening of an anode zinc can, placing a cathode terminal plate on a top protruding surface of a carbon rod which serves as a cathode current collector, and compressing side surfaces of the zinc can or bending an opening end of the zinc can.

Such batteries have difficulty in releasing a gas generated inside the batteries since they are highly air-tight. Thus, they are required to have a mechanism for preventing battery explosion, since a large amount of gas is generated when the batteries are misused, for example, connected reversely or short-circuited, and thus the internal pressure sometimes rises extraordinarily. Therefore, the following mechanisms have been devised and proposed:
(1) An explosion proof mechanism that the adhesion between the inner surface of an internal cylinder of the gasket and a carbon rod inserted in the gasket comes loose upon an increase in battery internal pressure, thereby to form a gap through which a gas is released.
(2) A mechanism that a vertical groove is formed on the inner surface of an internal cylinder of the gasket to help release a gas.
(3) An explosion proof mechanism that a part of the gasket is provided with a thinner portion, which is broken by the internal pressure, thereby to release a gas therefrom.

These explosion proof mechanisms, however, have had the following problems:

Specifically, these mechanisms have a variance in the pressure at which the gas is released (hereinafter referred to as explosion prevention actuating pressure) due to factors such as material and molding condition. The mechanism of (3), in particular, has problems that an especially careful selection of material and thickness of the thinner portion of the gasket is necessary for breaking the thinner portion at a certain pressure or higher and that a large variance in explosion prevention actuating pressure tends to occur also due to external factors.

Further, when the variance in explosion prevention actuating pressure prevents the gas from being released at an appropriate pressure, the gasket is raised upward by the internal pressure, thereby to cause adhesion between the upper surface of the internal cylinder of the gasket and the cathode terminal plate. As a result, even if the gas goes upward through the gap formed between the carbon rod and the inner surface of the internal cylinder, the gas can not find a gas releasing path because of the strong adhesion of the gasket and the cathode terminal plate, which may result in battery explosion.

US 5 932 371 A discloses an electrochemical cell comprising a gasket having an internal cylinder which closely adheres to and holds a carbon rod, an external cylinder which closely adheres to an inner wall of an opening of a zinc can, and a connecting portion which connects said internal cylinder and said external cylinder; and a cathode terminal plate which fits to a top surface of the carbon rod, said battery being sealed by caulking an opening end of the zinc can and an outer periphery of said cathode terminal plate with an upper end of said external cylinder therebetween.

US 4 227 701 A discloses an electrochemical cell having a sealing gasket with a snap-through and tearing mechanism, to allow venting of the cell in case of an increase in internal pressure.

EP 0 785 585 A and JP 60-062059 A disclose electrochemical cells with a safety mechanism against increase in internal pressure by puncturing the gasket.

### Disclosure of the invention

It is an object of the present invention to provide a manganese dry battery having a high reliability for explosion prevention by employing a new gasket shape, which is easily manufactured and controlled in terms of its dimensions, as well as an explosion proof mechanism.

This object can be achieved by a manganese dry battery having the features of claim 1.

Advantageous further developments are set out in the dependent claims.

A manganese dry battery of the present invention comprises: a gasket having an internal cylinder which closely adheres to and holds a carbon rod, an external cylinder which closely adheres to an inner wall of an opening of a zinc can, and a connecting portion which connects the internal cylinder and the external cylinder; and a cathode terminal plate which fits to a top surface of the carbon rod, the battery being sealed by caulking an opening end of the zinc can and an outer periphery of the cathode terminal plate with an upper end of the external cylinder therebetween, wherein a cut-out portion is provided in at least a part of an upper portion of the internal cylinder of the gasket. The formation of this cut-out portion enables actuation of the explosion proof mechanism that the gasket is deformed upon an increase in battery internal pressure to form a gap between the gasket and the carbon rod, and a gas is released from a vent hole provided to the cathode terminal plate through the gap.

It is preferable that the depth of the cut-out portion, i.e., the height from the bottom of the cut-out portion to the top surface of the internal cylinder, is 5 to 40% of the length of the portion of the internal cylinder closely adhering to the carbon rod.

Also, it is preferable that the cut-out portion is provided at an angle of 60 to 270° from the central axis of the internal cylinder.

### Brief Description of Drawings

FIG. 1 is a longitudinal sectional view illustrating the structure of a manganese dry battery in accordance with one example of the present invention.
FIG. 2 is a schematic perspective view of a gasket used for the manganese dry battery of the present invention.
FIG. 3 illustrates the explosion proof mechanism of the gasket used for the manganese dry battery of the present invention.
FIG. 4 is a schematic sectional view illustrating the joint of a cathode terminal plate and the gasket used for the manganese dry batter of the present invention.
FIG. 5 is a longitudinal sectional view illustrating the structure of a conventional manganese dry battery.

### Best Mode for Carrying Out the Invention.

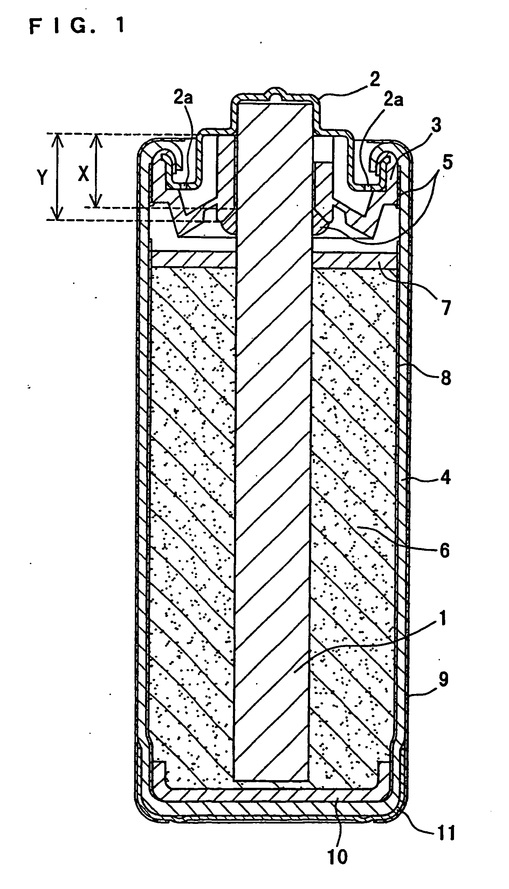

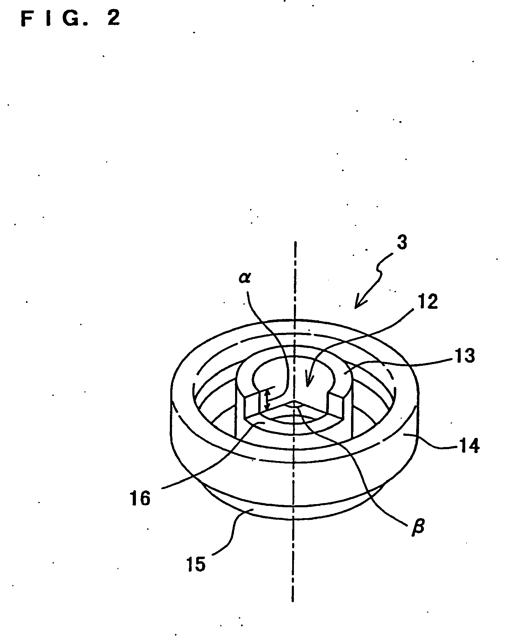

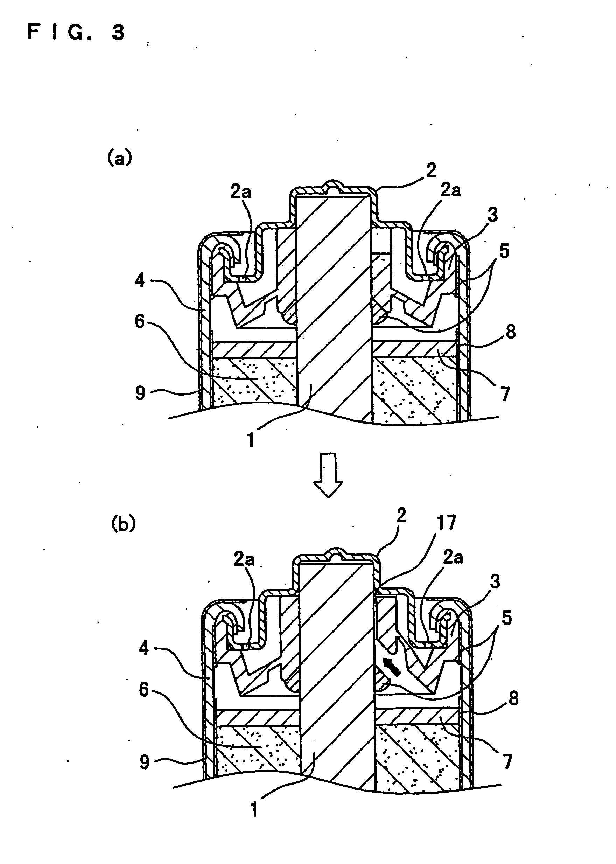

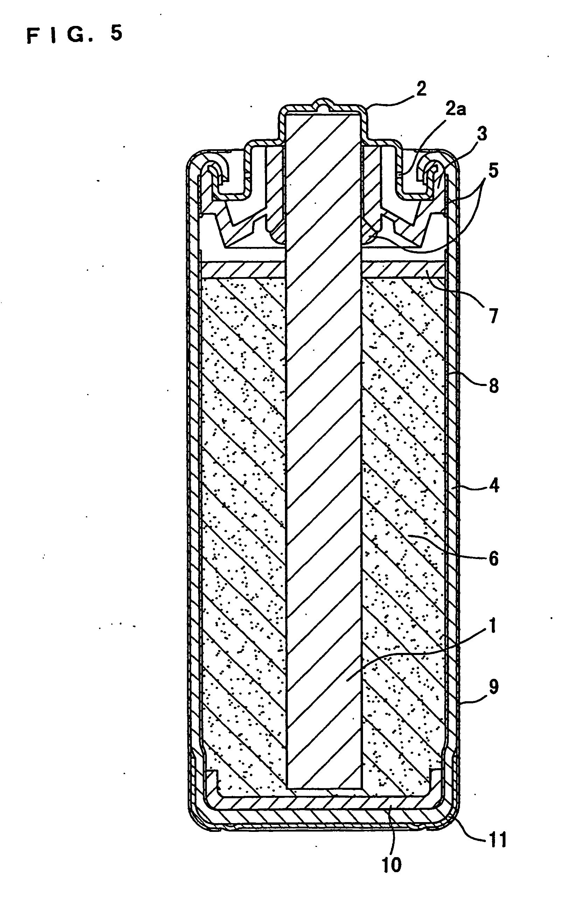

FIG. 1 is a schematic longitudinal sectional view of a manganese dry battery in accordance with one example of the present invention. FIG. 2 is a schematic perspective view of a gasket 3 used for the manganese dry battery of the present invention as shown in FIG. 1. FIG. 3 has partially enlarged views of the vicinity of the gasket 3 as shown in FIG. 1, which illustrate the explosion proof mechanism of the gasket used for the manganese dry battery of the present invention. Further, FIG. 5 is a schematic longitudinal sectional view illustrating the structure of a conventional manganese dry battery.

The structure of the manganese dry battery of the present invention as shown in FIG. 1 is the same as that of the conventional manganese dry battery as shown in FIG. 5 except for the gasket.

In the manganese dry batteries as shown in FIGs. 1 and 5, a cupped bottom plate 11 is fitted to the bottom of an anode zinc can 4, a separator 8 and a bottom insulator 10 are placed into the anode zinc can, and a cathode mixture 6 is filled thereinto. A carbon rod 1 is inserted in the center of the cathode mixture 6, and a gasket 3 jointed to a cathode terminal plate 2 is inserted in the zinc can 4 in such a manner as to hold the carbon rod 1 at the center thereof.

As shown in FIG. 2, the gasket 3 comprises an internal cylinder 13 having a through-hole 12 for accommodating the carbon rod 1, an external cylinder 14 adhering to an opening end of the zinc can 4, and a connecting portion connecting both cylinders. The connecting portion may be provided with an annular thinner portion. However, the gasket of the conventional manganese dry battery as shown in FIG. 5 does not have a cut-out portion 16 which will be described below.

Asphalt, which is a sealant 5, is applied to the adhering surface of the carbon rod 1 and the internal cylinder 13 of the gasket 3, the portion below there, the adhering surface of the zinc can 4 and the external cylinder 14 of the gasket 3, and the portion below there.

The gasket 3 is integrally jointed to the cathode terminal plate 2 and is then fitted into the opening of the anode zinc can 4 accommodating power generating elements. Subsequently, the upper side surfaces of the zinc can 4 are compressed in order to shrink the diameter thereof, so that the inner wall of the zinc can and the external cylinder 14 of the gasket 3 closely adhere to each other. The opening end of the zinc can is then bent inward together with the upper end of the external cylinder 14 so as to tightly sandwich the cathode terminal plate 2, which gives a sealed naked battery.

The sealed naked battery thus produced is coated with a tube 9 comprising a heat-shrinkable resin film as a base material.

In one example of the present invention, the cut-out portion 16 is provided in at least a part of an upper portion of the internal cylinder 13 of the gasket 3, as shown in FIG. 2. Meanwhile, the cathode terminal plate 2 is provided with a vent hole 2a at a location corresponding to a connecting portion 15 of the gasket 3, as shown in FIG. 1.

In other words, this dry battery is formed with the cut-out portion 16 capable of forming a gas releasing path above the internal cylinder 13 of the gasket 3. By forming the cut-out portion 16, a part of the gasket 3 is deformed and raised upward to form a gap 17 between the internal cylinder 13 and the carbon rod 1 when a gas is generated inside the battery and the internal pressure is thereby raised in cases such as misuse of the batteries. Then, the gas passes through the gap 17 and is released from the vent hole 2a to outside of the battery, whereby battery explosion is prevented.

FIG. 3 illustrates the above-described explosion proof mechanism of the battery of the present invention. In FIG. 3, (a) is a partially enlarged view illustrating the structure of the vicinity of the gasket of the manganese dry battery of the present invention as shown in FIG. 1, wherein the normal state of the battery is shown. Also, (b) illustrates the state of the battery when a gas is generated inside the battery for some reasons, wherein the formation of the above-mentioned cut-out portion 16 allows the gasket 3 to be deformed and raised upward, thereby to form the gap 17 for releasing the gas to outside of the battery.

In contrast, according to the conventional explosion proof mechanism, at time of gas generation inside the battery and an extraordinary rise in internal pressure caused by misuse of the batteries such as short-circuit or reverse connection, the gasket is raised by the internal pressure, thereby to cause adhesion between the top surface of the internal cylinder 13 of the gasket 3 and the cathode terminal plate 2, and the thinner portion of the connecting portion 15 is consequently broken. Accordingly, the breaking of the thinner portion allows for the release of the gas to outside of the battery.

The following will describe the dimensions of the cut-out portion 16 provided on the upper portion of the gasket 3 in the manganese dry battery of the present invention.

As shown in FIG. 2, the depth of the cut-out portion 16, i.e., the height α (mm) from the bottom of the cut-out portion 16 to the top surface of the internal cylinder 13, is preferably 5 to 40 % of the length (corresponding to X in FIG. 1) of the portion of the internal cylinder 13 closely adhering to the carbon rod 1.

The range of 5 to 40% was determined because, in a range of lower than 5%, the gasket 3 tends to be less deformed or warped so that the gas is released less effectively, while in a range of more than 40%, the contacting surface of the carbon rod 1 and the internal cylinder 13 is smaller so that the battery becomes less air-tight, which will result in deterioration of the discharge capacity of the battery after a long-term storage.

Also, it is preferable that the cut-out portion is provided at an angle of 60 to 270° from the central axis of the internal cylinder. In other words, the angular width of the cut-out portion 16, i.e., the angle β (°) whose vertex is on the central axis of the internal cylinder 13 as shown in FIG. 2, is preferably 60 to 270°.

The range of 60 to 270° was determined from the similar reasons to those given above. In a range of lower than 60° , the gasket 3 tends to be less deformed or warped so that the gas is released less effectively. In a range of more than 270° , the contacting surface of the carbon rod 1 and the internal cylinder 13 is smaller so that the battery becomes less air-tight, and the cathode terminal 2 tends to be warped when the gasket 3 is jointed to the cathode terminal plate 2.

As shown in FIG. 1, when the manganese dry battery of the present invention is fabricated, the zinc can 4 is first mounted with the separator 8 and the bottom insulator 10, then filled with the cathode mixture 6, and mounted with an upper insulator 7 and the carbon rod 1. Thereafter, the gasket 3 which is jointed to the cathode terminal plate 2 beforehand is fitted into the upper portion of the zinc can 4.

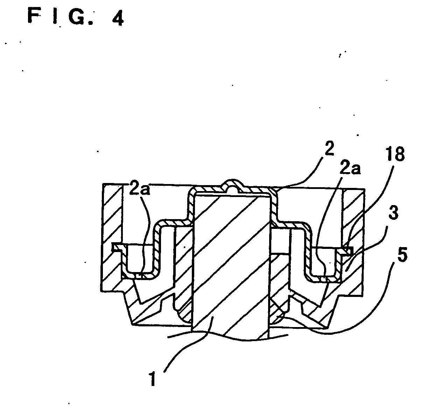

FIG. 4 shows the joint of the cathode terminal plate 2 and the gasket 3. As shown in FIG. 4, in order to firmly joint the cathode terminal plate 2 to the gasket 3 by forming an indentation 18, it is preferable that β is 60 to 270° , as explained above. In FIG. 4, in order to describe the joint of the cathode terminal plate 2 and the gasket 3, the zinc can, the sealant and the like are omitted and the gasket 3 is illustrated as not curling inward.

### Example 1 and Comparative Example 1

Next, a concrete example of the present invention will be described.

In the manganese dry battery of AAA size as shown in FIG. 1, the zinc can 4 was first mounted with the separator 8 and the bottom insulator 10, then filled with the cathode mixture 6, and mounted with the carbon rod 1 in the center thereof. Separately, the cathode terminal plate 2 was jointed to the gasket 3 having the cut-out portion 16 formed on the internal cylinder 13. Next, after the sealant 5 was applied to the lower outer surface of the external cylinder 14 of the gasket 3 and the upper outer surface of the carbon rod 1, the gasket 3 jointed to the cathode terminal plate 2 was fitted into the upper portion of the zinc can 4. Lastly, the upper portion of the zinc can 4 was curled inward and caulked, to produce a manganese dry battery "A" of the present invention.

The height α of the cut-out portion 16 of the gasket 3 was 0.6 mm, i.e., 22% of 2.7 mm which was the height (x in FIG. 1) of the portion of the internal cylinder 13 closely adhering to the carbon rod 1. Also, the angular width of the cut-out portion 16, i.e., the angle β (°) whose vertex is on the central axis of the internal cylinder 13, was 180°. Herein, the height (Y in FIG. 1) of the internal cylinder 13 of the gasket 3 on the side which was not adhering to the carbon rod 1 was 3.2 mm.

For comparison, a conventional manganese dry battery of AAA size "B" as shown in FIG. 5 was produced, in which the cut-out portion 16 was not formed on the internal cylinder 13 of the gasket 3.

The dry batteries "A" and "B" were subjected to a reverse connection test, wherein one of 4 batteries were connected reversely, to examine the rate of battery explosion occurrence. The test showed that 100 dry batteries of "A" were free from troubles such as explosion. On the other hand, some of 100 dry batteries of "B" exhibited deformation because of loosening of the can, partial crack or separation.

Next, the dry batteries "A" and "B" were stored under a high temperature of 45°C for 3 months to examine open circuit voltage and short-circuit current. The examination showed that there was no difference between the dry batteries "A" and "B".

### Industrial Applicability

As described above, the present invention can provide a highly safe manganese dry battery capable of preventing the explosion of the battery by securely releasing the gas at time of gas generation inside the battery and an extraordinary increase in internal pressure caused by reverse connection, short-circuit and the like.

## Claims

1. A manganese dry battery comprising: a gasket (3) having an internal cylinder (13) which closely adheres to and holds a carbon rod (1), an external cylinder (14) which closely adheres to an inner wall of an opening of a zinc can (4), and a connecting portion which connects said internal cylinder (13) and said external cylinder (14); and a cathode terminal plate (2) which fits to a top surface of the carbon rod (1), said battery being sealed by caulking an opening end of the zinc can (4) and an outer periphery of said cathode terminal plate (2) with an upper end of said external cylinder (14) therebetween,
**characterized in that**
a cut-out portion (16) is provided in at least a part of an upper portion of the internal cylinder (13) of said gasket (3), such that said gasket (3) is deformed and raised upward upon an increase in battery internal pressure to form a gap (17) between said gasket (3) and said carbon rod (1), and a gas is released from a vent hole (2a) provided to said cathode terminal plate (2) through said gap (17).

2. The manganese dry battery in accordance with claim 1, wherein said cut-out portion (16) has a depth of 5 to 40t of the length of the portion of said internal cylinder (13) closely adhering to the carbon rod (1).

3. The manganese dry battery in accordance with claim 1 or 2, wherein said cut-out portion (16) is provided at an angle of 60 to 270 from the central axis of said internal cylinder (13).

## Patentansprüche

1. Mangan-Trockenbatterie mit:
einer Dichtung (3) mit einem inneren Zylinder (13), der an einem Kohlenstoffstift (1) dicht anhaftet und diesen hält, einem äußeren Zylinder (14), der an einer inneren Wand einer Öffnung einer Zink-Dose (4) dicht anhaftet, und einem Verbindungsabschnitt, der den inneren Zylinder (13) und den äußeren Zylinder (14) verbindet; und
einer Kathodenanschlussplatte (2), die an eine obere Fläche des Kohlenstoffstifts (1) gepasst ist, wobei die Batterie durch Verstemmen eines Öffnungsendes der Zink-Dose (4) und eines Außenumfangs der Kathodenanschlussplatte (2) mit einem dazwischen befindlichen oberen Ende des äußeren Zylinders (14) abgedichtet wird,
**dadurch gekennzeichnet, dass**
ein Ausschnitt (16) in wenigstens einem Teil eines oberen Abschnitts des inneren Zylinders (13) der Dichtung derart vorgesehen ist, dass bei einer Zunahme eines Batterie-Innendrucks die Dichtung (3) verformt und aufwärts bewegt wird, um einen Spalt (17) zwischen der Dichtung (3) und dem Kohlenstoffstift (1) auszubilden, und
ein Gas durch den Spalt (17) aus einer in der Kathodenanschlussplatte (2) vorgesehenen Lüftungsöffnung (2a) freigegeben wird.

2. Mangan-Trockenbatterie gemäß Anspruch 1, wobei der Ausschnitt (16) eine Tiefe von 5 bis 40% der Länge des Abschnitts des inneren Zylinders (13) hat, der an dem Kohlenstoffstift (1) dicht anhaftet.

3. Mangan-Trockenbatterie gemäß Anspruch 1 oder 2, wobei der Ausschnitt (16) in einem Winkel von 60 bis 270° zu der Mittelachse des inneren Zylinders (13) vorgesehen ist.

## Revendications

1. Pile sèche au manganèse comprenant: un joint (3) ayant un cylindre interne (13) qui adhère étroitement à et maintient une tige de carbone (1), un cylindre externe (14) qui adhère étroitement à une paroi interne d'une ouverture d'une gaine en zinc (4), et une portion de raccordement qui relie ledit cylindre interne (13) et ledit cylindre externe (14); et une plaque à borne cathodique (2) qui s'ajuste à une surface supérieure de la tige de carbone (1), ladite pile étant scellée en calfeutrant une extrémité d'ouverture de la gaine en zinc (4) et une périphérie externe de ladite plaque à borne cathodique (2) avec une extrémité supérieure dudit cylindre externe (14) entre celles-ci,
**caractérisée en ce que**
une portion découpée (16) est pourvue dans au moins une partie d'une portion supérieure du cylindre interne (13) dudit joint (3), de sorte que ledit joint (3) soit déformé et soulevé vers le haut dès l'augmentation de la pression interne de la pile afin de former un jeu (17) entre ledit joint (3) et ladite tige de carbone (1), et un gaz est libéré d'un trou d'aération (2a) pourvu à ladite plaque à borne cathodique (2) à travers ledit jeu (17).

2. Pile sèche au manganèse selon la revendication 1, dans laquelle ladite portion découpée (16) a une profondeur de 5 à 40% la longueur de la portion dudit cylindre interne (13) adhérant étroitement à la tige de carbone (1).

3. Pile sèche au manganèse selon la revendication 1 ou 2, dans laquelle ladite portion découpée (16) est pourvue à un angle de 60 à 270 de l'axe centrale dudit cylindre interne (13).
